(19) Europäisches Patentamt
European Patent Office
Office européen des brevets

(11) EP 0 566 705 B1

(12) EUROPEAN PATENT SPECIFICATION

(45) Date of publication and mention of the grant of the patent:
**08.05.1996 Bulletin 1996/19**

(21) Application number: **92919293.8**

(22) Date of filing: **17.09.1992**

(51) Int Cl.[6]: **G01S 7/52**, G01S 15/89

(86) International application number:
**PCT/GB92/01706**

(87) International publication number:
**WO 93/06503 (01.04.1993 Gazette 1993/09)**

(54) **ULTRASONIC RANGING DEVICES**

Ultraschallentfernungsmessern

DISPOSITIFS DE MESURE ULTRASONORE DE DISTANCE

(84) Designated Contracting States:
**DE FR GB**

(30) Priority: **17.09.1991 GB 9119790**

(43) Date of publication of application:
**27.10.1993 Bulletin 1993/43**

(73) Proprietors:
- **British Nuclear Fuels PLC**
**Risley Warrington Cheshire, WA3 6AS (GB)**
- **UNIVERSITY COLLEGE CARDIFF CONSULTANTS LTD.**
**Cardiff, CF1 1XL (GB)**

(72) Inventors:
- **BULL, David, Roger**
**Cardiff CF3 7BR (GB)**
- **Thomas, Seimon, Marc**
**Carmarthen Wales SA32 7TG (GB)**

(74) Representative: **McCormack, Derek James**
**"Patents Section"**
**Legal Department**
**British Nuclear Fuels plc**
**GB-Risley, Warrington, Cheshire WA3 6AS (GB)**

(56) References cited:
**WO-A-81/00456**

- **IEEE TRANSACTIONS ON ULTRASONICS, FERROELECTRICS AND FREQUENCY CONTROL vol. 35, no. 6, November 1988, NEW YORK US pages 800 - 808 G. HAYWARD ET AL. 'A digital hardware correlation system for fast ultrasonic data acquisition in peak power limited applications'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 566 705 B1

## Description

The present invention relates to ultrasonic ranging devices especially for mobile robot applications.

Ultrasonic ranging devices are widely used on mobile robots to detect the positions of objects such as obstacles. These devices operate by scanning a region of interest with a narrow ultrasonic beam and measuring the time of flight of signals reflected back to the region of the transmitter where they are detected by a receiver.

Although safe and economical ultrasonic ranging devices exhibit a major problem which is inhibiting their wider use as mobile robot sensors, namely that of specular reflection. In situations where target surfaces are not inclined at a favourable angle to the ultrasonic transmitter and receiver (which are usually combined as a single transducer), eg in the corner of a room, the transmitted beam may be repeatedly reflected. Signals will be detected by the receiver after multiple reflections giving an erroneous range measurement of the target.

Researchers in the field of mobile robot sensors have employed a number of processing methods to extract the range of a target from the signals returned to an ultrasonic detector but none has been entirely satisfactory.

According to the present invention there is provided an ultrasonic ranging device suitable for use as a sensor on a mobile robot, the device comprising a transmitter for transmitting in a scanned fashion a beam of ultrasonic energy over a target region of interest, a detector for detecting return ultrasonic energy comprising reflections of the transmitted beam from the target region and a signal processor for enhancing the signal detected by the detector, which processor comprises a correlator for correlating the signal output from the detector with a reference signal wherein the reference signal is a representation of the actual signal which has been produced by that detector when the transmitted beam has reflected at normal incidence from a plane reference target surface of interest, the processor also including a computer store (21) for storing said signal representation and applying the same as a reference signal to said correlator (19) during detection of a signal representing reflection from a target to be detected.

The said correlator may advantageously be or approximate to a matched filter which compares the output signal produced by the detector with the said reference signal and produces an output which is a measure of correlation of the two. The matched filter can be approximated in discrete time by a digital finite impulse response filter which applies to the detected signal an algorithm which represents passing discrete samples of the detected signal through a series of windows where the samples are multiplied by coefficients representing (time reversed) discrete samples of the reference signal.

Since in practice the noise is not completely uncorrelated within each filter window it has been found advantageous to perform a second matched filtering operation by storing the output of the first matched filtering operation and computing from that a modified reference signal, samples of which may be employed as modified coefficients to operate upon samples of the detected signal.

Preferably, the reflected or echo signal from a target surface detected by the detector in the device according to the present invention prior to being fed into the said signal processor is processed to provide broadband noise attenuation in one or both of the following ways. Firstly, the detected signal may be averaged over several recording runs. Uncorrelated or random noise components will be attenuated by this procedure whilst the invariant echo signal remains. Secondly, the detected signal may be passed through a band pass filter. This procedure can be used to eliminate successfully noise in the stop bands but noise of frequency similar to the fundamental remains un-attenuated. For example, for use with an ultrasonic beam transmitted with a frequency of 49.41 KHz a 16th order Butterworth band pass digital filter with 3dB cut-off frequencies located on each side of the 49.41 KHz fundamental may be employed.

The output of the said correlator may be applied to an adaptive threshold detector to detect the leading edge of an echo in a given detected signal and thereby enhance the signal produced. Simple thresholding is not normally sufficient owing to the amplitude variations between echoes. The adaptive threshold detector may apply an algorithm to the output of the correlator which represents one of the following procedures. In the first procedure the signal which comprises amplitude versus time is divided into a series of discrete samples across the time axis. The average is caclulated for the amplitude value in all samples. A threshold level above the average value is then set and the amplitude in each sample is compared with the threshold. An output is provided only where the same amplitude is above the threshold. In the second procedure a similar sampling technique is carried out but in this case the threshold is calculated from both the average and the standard deviation of the sampled amplitude values.

The transmitted beam may be scanned over a given arc in a series of discrete steps, eg by controlling the direction of the transmitted beam by the action of a stepper motor to which the transmitter is fixed.

The outputs from the said signal processor, eg matched filter, obtained for each step in a series of steps when the transmitter is scanned may be mapped to form a two-dimensional image being a radial plot of reflected signal intensity as measured in a series of grey scale levels as a function of distance from transmitter. This image may be enhanced by application of an algorithm which represents one of the following procedures.

In the first procedure, the two dimensional plot is divided into a series of discrete samples and a rectangular window is run in steps in a raster fashion over the entire plot to observe the samples appearing at each position of the window. A rectangular desirably square grid, eg 5x5 samples or pixels, will appear at each position of the window. The average

intensity value for all of the samples within the window is calculated at each position of the window and is compared with a threshold value. If the average is above the threshold the intensity of a sample within the window representative of the position of the window, eg at or near the centre of the window, is enhanced. If the average is below the theshold the intensity of that representative sample is reduced.

In the second alternative procedure the intensity values appearing at the various samples within the window at each position of the window are sorted into ascending order and the value of the intensity falling at the middle of the order sort is found. The value of the intensity of the representative sample of the window position is then adjusted to be equal to the value at the middle of the order sort.

In the device according to the present invention the ultrasonic beam transmitted by the transmitter will in general be a signal alternating at a fundamental oscillator frequency. The output may be emitted as a series of pulses. For the purpose of further enhancing signal to noise quality the envelope of each output pulse may itself comprise a pseudo-random code. Such a code is generated by a control device, the code also being applied to the detector. Alternatively the frequency of the pulses in the output may be frequency swept.

Although matched filtering and signal processing as may be employed in the device according to the present invention as described above are techniques which have previously been used in other fields their use in the processing of ultrasonic signals for the control of mobile robots has not previously been considered. Use of the ranging device according to the present invention provides unexpected benefits in this application in that the detection of target surfaces especially in locations giving specular reflection can be carried out more reliably than in the prior art. In any event, in the case of matched filtering the use of a filter reference signal which comprises a computed representation of an actual signal reflected from a given target surface and the use of a dual pass through the filter using as a further or modified reference in the second pass through the filter a signal representative of the matched filtered echo signal from the first pass are techniques which have not been applied in other fields such as radar and sonar.

For example, US 3803,598 which is concerned principally with target shape recognition (for military purposes) of distant targets and WO-81/00456 which is concerned principally with measuring distances for geological purposes both include correlators which are digital matched filters in which the correlation is essentially between the output (transmitted) and reflected signals. In neither case however is correlation effected between a detected signal from a given target and a reference signal which represents a signal already detected by that same device from a target under optimal conditions whereby the device recognises from the outset an "ideal" target reflection as in the present invention.

Embodiments of the present invention will now be described by way of example with reference to the accompanying drawings in which:

Figure 1 is a block schematic circuit diagram showing the various functional units included in an ultrasonic ranging device embodying the present invention;
Figure 2 is an illustration of series of waveforms of amplitude versus time for various signals used in the digital matched filter of the device shown in Figure 1;
Figure 3 is an illustration of two waveforms of amplitude versus time for input and output signals of the adaptive threshold unit of the device shown in Figure 1;
Figure 4 is a schematic diagram illustrating how a radial plot of echo signal intensity from target surfaces in a two dimensional scan of a scene is taken using a device such as that shown in Figure 1 and how the performance of such a device is measured;
Figures 5 and 6 are graphs comparing the error size versus signal intensity respectively for a prior art device and a device embodying the invention.

In the circuit of Figure 1 the output of an alternating electrical source 1 typically of frequency 49.41 KHz (although in principle any ultrasonic frequency could be used) is modulated by the output of a lms pulse generator 3 (which could alternatively be a generator providing a series of pseudo-random sequences of different pulse widths) controlled by a control unit 4 in a multiplier 5 whose output is fed into a high gain output amplifier 7 capable of delivering 300V signal bursts. The output of the amplifier 7 is employed to excite the transducer of an ultrasonic transmitter 9 which emits ultrasound signals through air toward a target surface 11 of interest.

The ultrasound signal reflected from the surface 11 is reflected and picked up by the transducer of a receiver 13. In practice the transducer of the transmitter 9 and receiver 13 may be a common transducer. The detected signal is amplified by an automatic gain controlled receiving amplifier 14. The items 1, 7, 9, 13 and 14 form part of a commercially available device known as "Polaroid Instrument Grade" transducer. The dashed line X indicates commercially available circuits.

The receiver 13 and the amplifier 14 referenced to the output of the control unit 4 form the raw signal detector.

The output of the amplifier 14 is fed into a preprocessing unit 17. The noise associated with the detected echo signal fed into the preprocessing unit 17 is attenuated by the unit 17. Firstly, the detected echo signal is passed in the unit 17 through a sixteenth order Butterworth band pass digital filter with 3dB cut-off frequencies located on each side

of the 49.41 KHz fundamental 1KHz from the fundamental. This filter successfully reduces broadband noise in its stop bands. Secondly, (but optionally) the detected echo signal is averaged over several recording runs. The random noise components will be attenuated whilst the invariant echo signal remains. This second noise attenuation technique is inherently more time consuming than the first owing to the finite speed of sound through air. Typically, ten recording runs are carried out.

The output of the preprocessing unit 17 is applied as input to a digital matched filter 19. A reference signal comprising multiplier coefficients for the individual windows making up the digital matched filter 19 is first acquired by capturing the echo signal produced by reflection from a plane specular surface perpendicular to the direction of the transmitted ultrasound beam and recording this information in a computer store 21. A coefficient reference signal for use by the digital matched filter 19 is subsequently computed from the information in the computer store 21. The computation process is carried out offline prior to application of the digital matched filtering operation. The target surface 11 of interest is then probed by ultrasound as described above and the detected echo signal is correlated with the computed reference signal applied into the digital matched filter 19. The output of this correlation process is returned to the computer store 21 in which a modified coefficient reference signal for the digital matched filter 19 is subsequently computed off-line. A further correlation of the detected echo signal is subsequently carried out with the modified coefficient reference signal computed by the computer store 21. The dashed lines from the preprocessor 17 and filter 19 to the computer store 21 indicate off-line precomputation cycles for the generation of reference templates for the filter 19.

Echo signals below the noise floor are accentuated and are made clearly visible by use of the technique of matched filtering as described using as reference the echo signal obtained from an "ideal" surface. The use of a second pass of the detected signal through the matched filter gives a superior noise attenuation to that obtained for a single pass.

The process of dual matched filtering as carried out by the filter 19 is illustrated in Figure 2. The "ideal" unfiltered echo signal from a perpendicular surface is shown in Figure 2(a). The region $S_1$ of the detected waveform represents a low signal and the region $N_1$ represents high noise. The reference signal computed from the "ideal" unfiltered echo signal and comprising the raw matched filter coefficients for the first pass of digital filtering obtained by a computation using the "ideal" echo signal is shown in Figure 2(b). The result of the first pass of the echo signal through the filter which comprises correlation of the echo signal with the reference signal shown in Figure 2(b) is shown in Figure 2(c). In this case, the envelope of the echo signal has been made more pronounced by the filtering process and the signal $S_1$ of Figure 2(a) has in this case been enhanced to form a signal $S_2$ region compared with a lower level noise $N_2$. The modified reference signal pre-computed as described above from the matched filtered "ideal" echo signal and used as coefficients for the second matched filtering pass is shown in Figure 2(d). Finally, Figure 2(e) shows the output of the matched filter after a second filtering run to correlate the detected echo signal with the modified reference shown in Figure 2(d). In Figure 2(e) the noise level has been reduced compared with Figure 2(c).

A mathematical representation of the matched filtering operation is as follows. Optimum noise rejection is achieved if the contaminated signal is cross-correlated with a function of shape identical to the uncontaminated signal. The matched filter can be approximated in discrete time to the use of a finite impulse response filter where the filter coefficients are equal to the time reversed samples of the ideal echo waveform, p[n]. The discrete time matched filter is thus given by Equation 1 as follows:

$$y[n] = \sum_{i=0}^{N} h[i]x[n-i] \qquad \text{Equation 1}$$

where the impulse response coefficient vector, **h**, is given by:

$$h_1[i]=p[N-i] \qquad \text{Equation 2}$$

Since in practice the noise is not completely uncorrelated within the filter window, a second matched filtering pass using modified filter coefficients are given in Equation 3 as follows, has been found to reduce noise further.

$$\underline{\bar{h}}_2 = h_1 * h_1 \qquad \text{Equation 3}$$

The signal comprising the output of the digital matched filter 19 is further enhanced either in an image processor 21 or in an adaptive thresholding unit 23.

In the adaptive thresholding unit 23 the echo signal is processed in the following way. An algorithm is applied to the signal which represents moving a sliding window Wi containing a row of discrete sampling elements over the signal as illustrated in Figure 3(a). The average of the samples within the window is measured and compared to a threshold T which is set according to the following Equation 4:

$$T[n] = [\sum_{i=0}^{N} x[n-i]]/(N-1) + K_1 \quad \text{... Equation 4}$$

where n the number of elements in the window, x is the window array and K is a constant. The threshold T is set, in fact, so that an output is provided only when the signal rises well above the general noise level. A typical value for K is 20. This procedure is illustrated in Figure 3(b) where three equal outputs $A_2$, $B_2$ and $C_2$ are obtained from three corresponding signal components $A_1$, $B_1$ and $C_1$ representing the output of the transmitter and valid and false echo signals respectively.

An alternative operation for the adaptive thresholding unit is to set the threshold T according to Equations 5 to 7 as follows:

$$T[n] = V[n] + K_2\, S[n] \quad \text{Equation 5}$$

where mean

$$V[n] = \sum_{i=0}^{N} x\,[n-i]/(N-1) \quad \text{... Equation 6}$$

and Sn is the Standard deviation and is given by

$$S[n] = \sqrt{\,[\sum_{i=0}^{N} (x[n-i]-v[n])^2 /(N-1)]} \quad \text{... Equation 7}$$

In this case, the threshold T is set according to both the mean and the standard derivation of the measurement within the sliding window. This alternative procedure provides improved performance at the expense of computation time. A typical value of $K_2$ for Equation 5 is 8.

Each output from the digital matched filter 19 is an A-scan result, that is a one dimensional measurement of amplitude versus time of echo signals received from a given target direction. If a series of such results is obtained by scanning the transmitter 9 and receiver 13 around a wide arc, eg 180° in finite steps, eg at intervals of one degree, and recording a result at each step, a two-dimensional map or B-scan may be built up of the recorded echo intensity for each direction angle of transmitted beam. The image processor 21 initially collects outputs from the digital matched filter 19 to build up such a map. Each A-scan echo amplitude is recorded onto one of 64 grey scale levels to build up the B-scan map.

The raw B-scan map built up by the image processor 21 is enhanced in one of two alternative ways by the processor 21 as follows. In the first alternative procedure a rectangular or square window is run over the image. The image intensity at each cell within the window is measured and the average value for the whole window is calculated. The average value is compared with a threshold value. If the threshold is exceeded by the average value the intensity at the central cell in the window is increased. If the threshold is less than the average value for the window the intensity at the central cell is decreased. Optimal values for the number of cells in a window and the threshold level (on a scale 0 to 64) have been found to be 6 and 27 respectively.

In the second alternative procedure employed by the digital signal processor 21 a rectangular window is again run over the image but in this case the intensities appearing at each cell in the window are sorted into ascending order. The intensity value in the middle of the order is then extracted from the sort and the central cell in the window is set to this value. The procedure is known as rank order filtering. It has the property of performing a low pass filtering operation whilst preserving edges. It removes random isolated noise values whilst preserving contiguous echoes from valid targets.

Both image processing procedures which may be employed in the image processor 21 as described above effectively clean the observed image producing a more pleasing form for observation if the image is displayed and viewed visually.

The performance of a device as shown in Figure 1 compared to a conventional commercial ultrasonic detector has been investigated as follows. A radial plot of signal intensity returned from each increment of area in a two-dimensional scene scanned by the ultrasonic transducer was built up. The output obtained in each case was compared with the output which is expected from known reflecting surfaces within the scene. Each pixel within the plot giving an

erroneous signal reading compared with the distance to the known surface was designated an error pixel and the number of the error pixels was counted each being weighted in proportion to its distance from the relevant known surface. In this way, small range errors are penalised less than greater ones. This procedure is illustrated in Figure 4 where the position of the ultrasonic transducer rotating stepwise is indicated as T and known walls are indicated as W. The shaded area E indicates the area around error pixels in the plot.

The number and error weighting of pixels obtained in the above calculation was plotted against grey level threhold for an unfiltered signal obtained using the commercial detector and then for a signal processed with by the device shown in Figure 1 using dual filtering in the digital matched filter 19 and signal enhancement in the image processor. The respective results are shown in Figures 5 and 6. As can be seen from Figures 5 and 6 the error measured as thousands of weighted pixels is reduced to a low level at a much lower grey intensity level threshold in Figure 6 thereby providing a much more reliable output image of the scanned scene.

**Claims**

1. An ultrasonic ranging device suitable for use as a sensor on a mobile robot, the device comprising a transmitter (9) for transmitting in a scanned fashion a beam of ultrasonic energy over a target region of interest (11), a detector (13, 14) for detecting return ultrasonic energy comprising reflections of the transmitted beam from the target region and a signal processor (17, 19) for enhancing the signal detected by the detector, which processor comprises a correlator (19) for correlating the signal output from the detector with a reference signal wherein the reference signal is a representation of the actual signal which has been produced by that detector when the transmitted beam has reflected at normal incidence from a plane reference target surface of interest, the processor also including a computer store (21) for storing said signal representation and applying the same as a reference signal to said correlator (19) during detection of a signal representing reflection from a target to be detected.

2. A device as in claim 1 and wherein the computer store in operation applies the said reference signal to the correlator as a series of multiplier coefficients.

3. A device as in claim 1 and wherein the said correlator is or approximates to a digital matched filter which compares the output signal produced by the detector with the said reference signal and produces an output which is a measure of correlation of the two.

4. A device as claimed in claim 3 and wherein the digital matched filter has a reference signal which is representative of the output of the digital matched filter in a previous filter pass using the aforementioned reference signal.

5. A device as claimed in claim 1 and wherein prior to being fed into the said signal processor the output of the said detector is passed through a pre-processor (17) where it is processed to provide broadband noise attenuation.

6. A device as claimed in any one of the preceding claims and wherein the output of the said correlator is applied to an adaptive threshold detector (23) to detect the leading edge of an echo in a given detected signal thereby to enhance the signal produced.

7. A device as claimed in claim 1 and wherein the transmitted beam produced by the transmitter is capable of being scanned over a given arc in a series of discrete steps.

8. A device as claimed in claim 7 and which includes an image processor (21) wherein the outputs from the said signal processor (17, 19) obtained for each step in a series of steps when the transmitter is scanned are mapped to form a two-dimensional image being a radial plot of reflected signal intensity as measured in a series of grey scale levels as a function of distance from transmitter.

9. A device as claimed in claim 8 and wherein in operation the image processor applies to the said two-dimensional image an algorithm which represents dividing the two-dimensional plot into a series of discrete samples, running a rectangular window in steps in a raster fashion over the entire plot to observe samples appearing at each position of the window, a rectangular grid of samples or pixels appearing at each position of the window; calculating the average intensity value for all of the samples within the window at each position of the window and comparing the calculated average with a threshold value; if the average is above the threshold enhancing the intensity of a sample within the window representative of the position of the window and if the calculated average is below a given threshold reducing the intensity of the representative sample.

**10.** A device as claimed in claim 8 and wherein the image processor in operation applies to the said two-dimensional image an algorithm which represents dividing the two-dimensional plot into a series of discrete samples, running a rectangular window in steps in a raster fashion over the entire plot to observe the samples appearing at each position of the window, sorting the intensity values appearing at the various samples within the window at each position of the window into ascending order, determining the value of the intensity falling at the middle of the order sort, and adjusting the value of the intensity of a representative sample of the window position to be equal to the value at the middle of the order sort.

**Patentansprüche**

**1.** Vorrichtung zur Ultraschallentfernungsmessung zur Verwendung als ein Sensor in bzw. auf einem mobilen Roboter, wobei die Vorrichtung aufweist, einen Sender (9) zum Senden eines Strahles von Ultraschallenergie in einer abtastenden Weise über einen interessierenden Zielbereich (11), einen Detektor (13, 14) zum Detektieren zurückkommender Ultraschallenergie, die Reflektionen des gesendeten Strahls von dem Zielbereich aufweist, und einen Signalprozessor (17, 19), um das durch den Detektor detektierte Signal zu verstärken, wobei der Prozessor eine Korrelationseinrichtung (19) zum Korrelieren des von dem Detektor ausgegebenen Signales mit einem Referenzsignal aufweist, wobei das Referenzsignal eine Darstellung des tatsächlichen Signals ist, das durch den Detektor erzeugt worden ist, wenn der abgesandte Strahl bei normalem Einfall bzw. Einfallswinkel von einer interessierenden ebenen Referenzzieloberfläche reflektiert worden ist, wobei der Prozessor auch einen Computerspeicher (21) enthält, um die Signaldarstellung zu speichern und dieselbe als ein Referenzsignal an der Korrelationseinrichtung (19) während der Detektion eines Signals anzulegen, das die Reflektion von einem zu detektierenden Ziel darstellt.

**2.** Vorrichtung nach Anspruch 1, in der der Computerspeicher im Betrieb das besagte Referenzsignal an die Korrelationseinrichtung als eine Reihe von Vervielfachungskoeffizienten anlegt.

**3.** Vorrichtung nach Anspruch 1, in der die besagte Korrelationseinrichtung ein digital angepaßter Filter oder angenähert ein digital angepaßter Filter ist, der das von dem Detektor erzeugte Ausgangssignal mit dem Referenzsignal vergleicht und einen Ausgang erzeugt, der eine Messung der Korrelation der zwei darstellt.

**4.** Vorrichtung nach Anspruch 3, in der der digital angepaßte Filter ein Referenzsignal hat, das den Ausgang des digital angepaßten Filters in einem vorherigen Filterdurchlauf darstellt, wobei das zuvor aufgezeigte Referenzsignal verwendet wird.

**5.** Vorrichtung nach Anspruch 1, in der vor dem Einspeisen in den Signalprozessor der Ausgang des besagten Detektors durch einen Vorprozessor (17) hindurchgeschickt wird, wo er verarbeitet wird, um eine breitbandige Rausch- bzw. Störungsdämpfung zur Verfügung zu stellen.

**6.** Vorrichtung nach einem der voranstehenden Ansprüche, in der der Ausgang der Korrelationseinrichtung an einen anpaßbaren Schwellendetektor (23) angelegt wird, um die führende Flanke eines Echos in einem vorgegebenen detektierten Signal zu detektieren, um dabei das erzeugte Signal zu verstärken.

**7.** Vorrichtung nach Anspruch 1, in der der gesendete Strahl, der durch den Sender erzeugt ist, dazu in der Lage ist, über einen vorgegebenen Kreisbogen bzw. -sektor eine Reihe von diskreten Schritten abzutasten bzw. abzuscannen.

**8.** Vorrichtung nach Anspruch 7, die einen Bildprozessor (21) umfaßt, in dem die Ausgänge von dem Signalprozessor (17, 19), die für jeden Schritt in einer Reihe von Schritten erhalten werden, wenn der Sender abtastet, dargestellt werden, um ein zweidimensionales Bild zu ergeben, das eine radiale Darstellung einer reflektierten Signalintensität ist, wie sie in einer Reihe von Grauskalenpegeln als eine Funktion der Entfernung vom Sender gemessen wird.

**9.** Vorrichtung nach Anspruch 8, in der im Betrieb der Bildprozessor auf das besagte zweidimensionale Bild einen Algorithmus anwendet, der die Aufteilung der zweidimensionalen Darstellung in einer Reihe von diskreten Mustern darstellt, wobei ein rechtwinkliges Fenster in Schritten in einer Rasterweise über die gesamte Darstellung läuft, um Muster zu beobachten, die an jeder Position des Fensters erscheinen, wobei ein rechtwinkliges Gitter von Mustern oder Bildelementen an jeder Position des Fensters erscheint; der mittlere Intensitätswert für sämtliche der Muster innerhalb des Fensters an jeder Position des Fensters berechnet wird und der berechnete Mittelwert mit einem Schwellenwert verglichen wird; falls der Mittelwert oberhalb der Schwelle ist, die Intensität eines Musters

innerhalb des Fensters verstärkt wird, das für die Position des Fensters repräsentativ ist, und falls der berechnete Mittelwert unterhalb einer gegebenen Schwelle ist, die Intensität des repräsentativen Musters verringert wird.

**10.** Vorrichtung nach Anspruch 8, in der der Bildprozessor im Betrieb einen Algorithmus auf das zweidimensionale Bild ansetzt, der die Aufteilung der zweidimensionalen Darstellung ein einer Reihe von diskreten Mustern darstellt, wobei ein rechtwinkliges Fenster in Schritten in einer Rasterweise über die gesamte Darstellung läuft, um die Muster zu beobachten, die bei jeder Position des Fensters erscheinen, wobei die Intensitätswerte, die bei den verschiedenen Mustern innerhalb des Fensters an jeder Position des Fensters erscheinen, in aufsteigender Ordnung sortiert werden, wobei der Wert der Intensität bestimmt wird, der auf die Mitte der sortierten Ordnung fällt, und der Intensitätswert eines repräsentativen Musters der Fensterposition als gleich zu dem Wert an der Mitte der sortierten Ordnung eingestellt wird.

**Revendications**

**1.** Dispositif ultrasonore de mesure de distance destiné à être utilisé comme capteur sur un robot mobile, le dispositif comprenant un émetteur (9) destiné à émettre, sous forme balayée, un faisceau d'énergie ultrasonore dans une région cible intéressante (11), un détecteur (13, 14) destiné à détecter l'énergie ultrasonore renvoyée qui comprend les réflexions du faisceau émis par la région cible et un processeur de signaux (17, 19) destiné à renforcer le signal détecté par le détecteur, le processeur comprenant un corrélateur (19) destiné à corréler le signal transmis par le détecteur à un signal de référence, le signal de référence étant une représentation du signal réel qui a été produit par ce détecteur lorsque le faisceau émis a réfléchi en incidence normale par rapport à une surface plane de référence d'une cible intéressante, le processeur comprenant aussi une mémoire (21) d'ordinateur destinée à conserver des représentations de signaux et à les appliquer, comme signal de référence, au corrélateur (19) pendant la détection d'un signal représentant une réflexion par une cible à détecter.

**2.** Dispositif selon la revendication 1, dans lequel l'ordinateur applique, pendant le fonctionnement, le signal de référence au corrélateur sous forme d'une série de coefficients multiplicateurs.

**3.** Dispositif selon la revendication 1, dans lequel le corrélateur est un filtre numérique adapté ou correspond approximativement à un filtre numérique adapté qui compare le signal de sortie produit par le détecteur au signal de référence et produit un signal de sortie qui est une mesure de la corrélation des deux signaux.

**4.** Dispositif selon la revendication 3, dans lequel le filtre numérique adapté a un signal de référence qui est représentatif du signal de sortie du filtre numérique adapté dans un passage précédent dans le filtre à l'aide du signal précité de référence.

**5.** Dispositif selon la revendication 1, dans lequel, avant d'être transmis au processeur de signaux, le signal de sortie du détecteur est transmis dans un processeur préalable (17) dans lequel il est traité pour assurer une atténuation du bruit dans une large bande.

**6.** Dispositif selon l'une quelconque des revendications précédentes, dans lequel le signal de sortie du corrélateur est appliqué à un détecteur (23) à seuil à adaptation destiné à détecter le flanc avant d'un écho dans un signal détecté donné et à accentuer ainsi le signal produit.

**7.** Dispositif selon la revendication 1, dans lequel le faisceau émis produit par l'émetteur peut balayer un arc déterminé au cours d'une série de pas discrets.

**8.** Dispositif selon la revendication 7, qui comprend un processeur (21) d'image dans lequel les signaux de sortie du processeur (17, 19) de signaux obtenus pour chaque pas d'une série de pas lorsque l'émetteur assure un balayage sont mis sous forme d'une image bidimensionnelle qui est un tracé radial de l'intensité du signal réfléchi mesurée dans une série de niveaux de gris en fonction de la distance à l'émetteur.

**9.** Dispositif selon la revendication 8, dans lequel, pendant le fonctionnement, le processeur d'image applique à l'image bidimensionnelle un algorithme qui représente la division de la courbe bidimensionnelle en une série d'échantillons discrets, le déplacement d'une fenêtre rectangulaire par pas, à la manière d'une trame, sur toute la courbe pour l'observation d'échantillons apparaissant à chaque position de la fenêtre, une grille rectangulaire d'échantillons ou d'éléments d'image apparaissant à chaque position de la fenêtre, le calcul de la valeur moyenne

d'intensité pour tous les échantillons contenus dans la fenêtre à chaque position de la fenêtre et la comparaison de la moyenne calculée à une valeur de seuil, et, si la moyenne dépasse le seuil, l'accentuation de l'intensité d'un échantillon dans la fenêtre, représentatif de la position de la fenêtre et, lorsque la moyenne calculée est inférieure à un seuil déterminé, la réduction de l'intensité de l'échantillon représentatif.

**10.** Dispositif selon la revendication 8, dans lequel le processeur d'image, pendant le fonctionnement, applique à l'image bidimensionnelle un algorithme qui représente la division de la courbe bidimensionnelle en une série d'échantillons discrets, le déplacement d'une fenêtre rectangulaire par pas, à la manière d'une trame, sur l'ensemble de la courbe pour l'observation des échantillons apparaissant à chaque position de la fenêtre, le tri des valeurs d'intensité apparaissant aux divers échantillons dans la fenêtre à chaque position de la fenêtre, dans un ordre ascendant, la détermination de la valeur de l'intensité se trouvant au milieu du tri, et l'ajustement de la valeur de l'intensité d'un échantillon représentatif de la position de la fenêtre afin qu'elle soit égale à la valeur qui se trouve au milieu du tri.

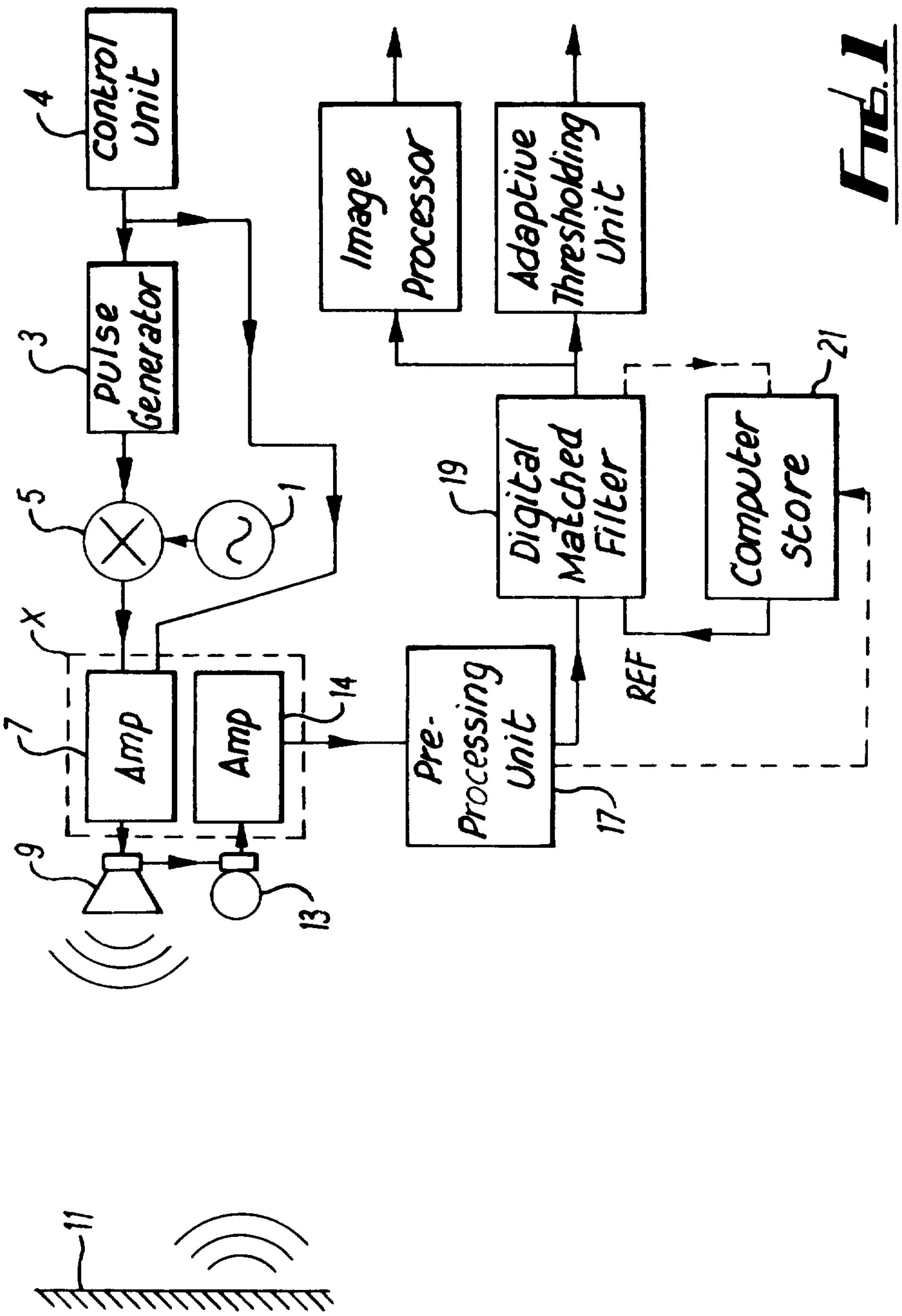
Control Unit
Pulse Generator
Amp
Amp
Image Processor
Adaptive Thresholding Unit
Digital Matched Filter
Computer Store
Pre-Processing Unit
REF
1
3
4
5
7
9
11
13
14
17
19
21
X

Fig.1

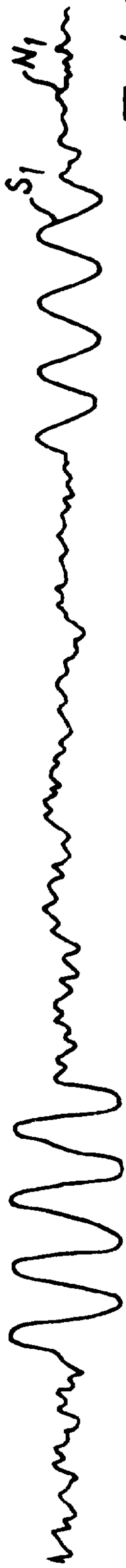


Fig. 2a

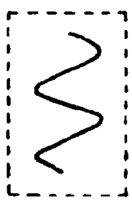

Fig. 2b

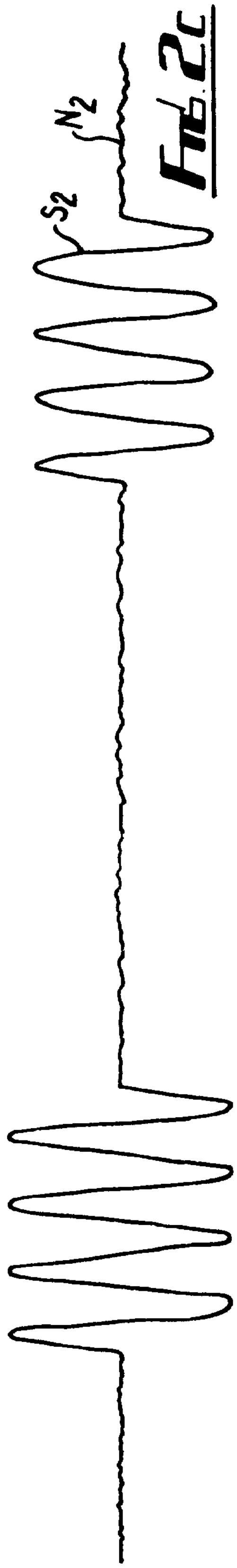


Fig. 2c

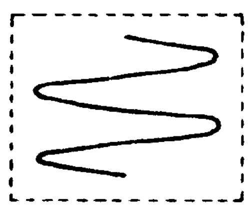

Fig. 2d

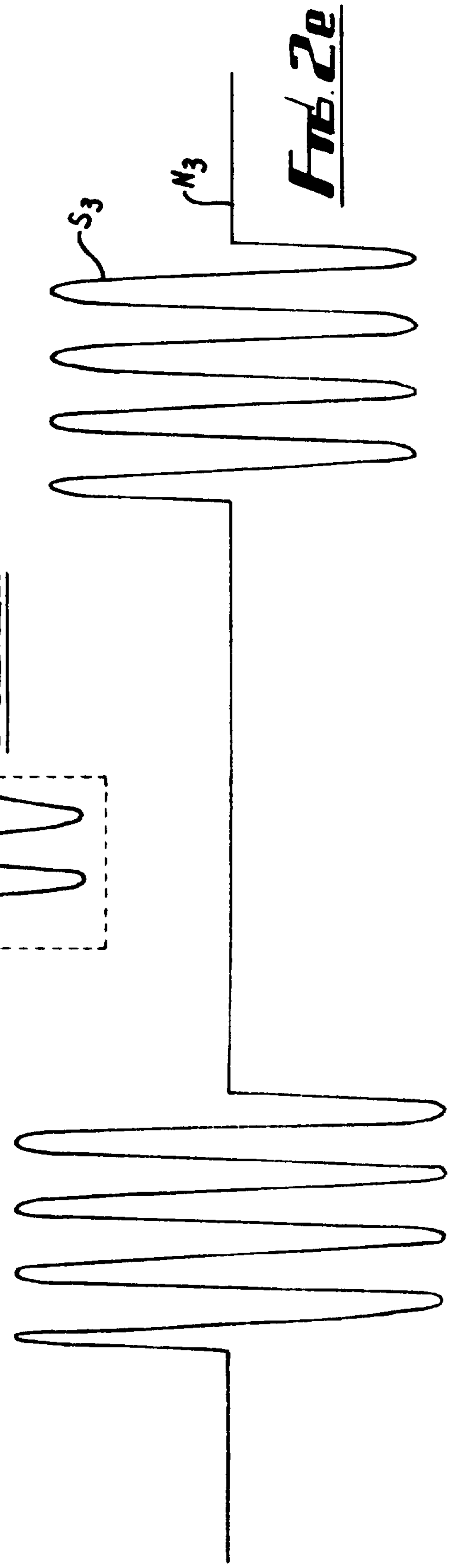


Fig. 2e

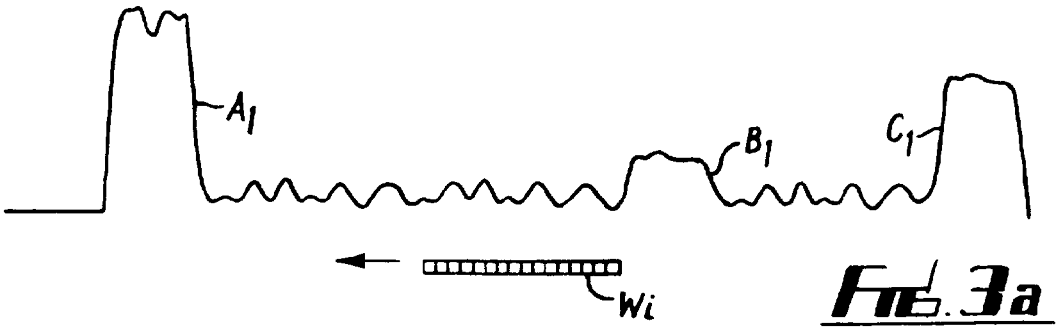


FIG. 3a

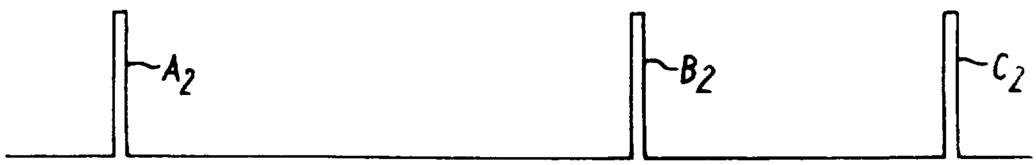


FIG. 3b

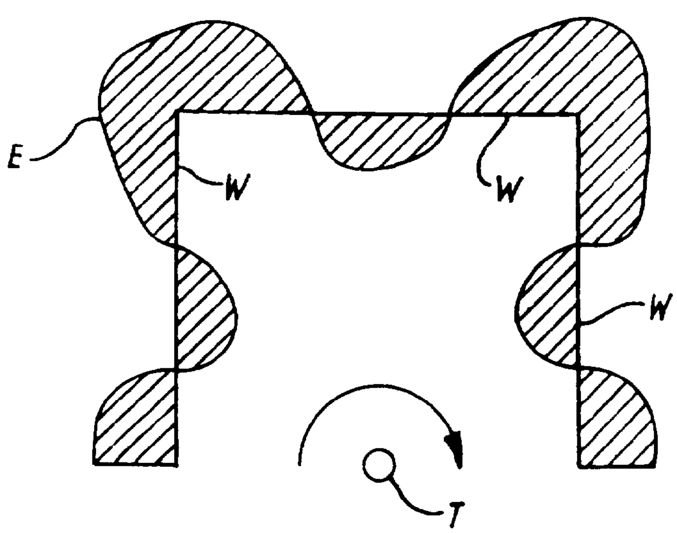


FIG. 4

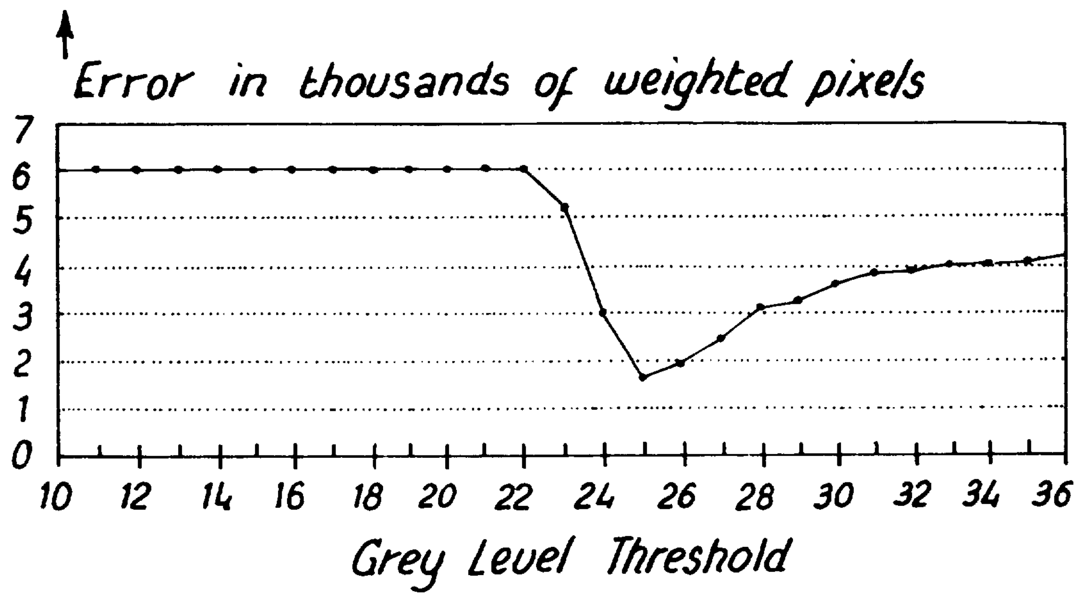


FIG. 5

PRIOR ART

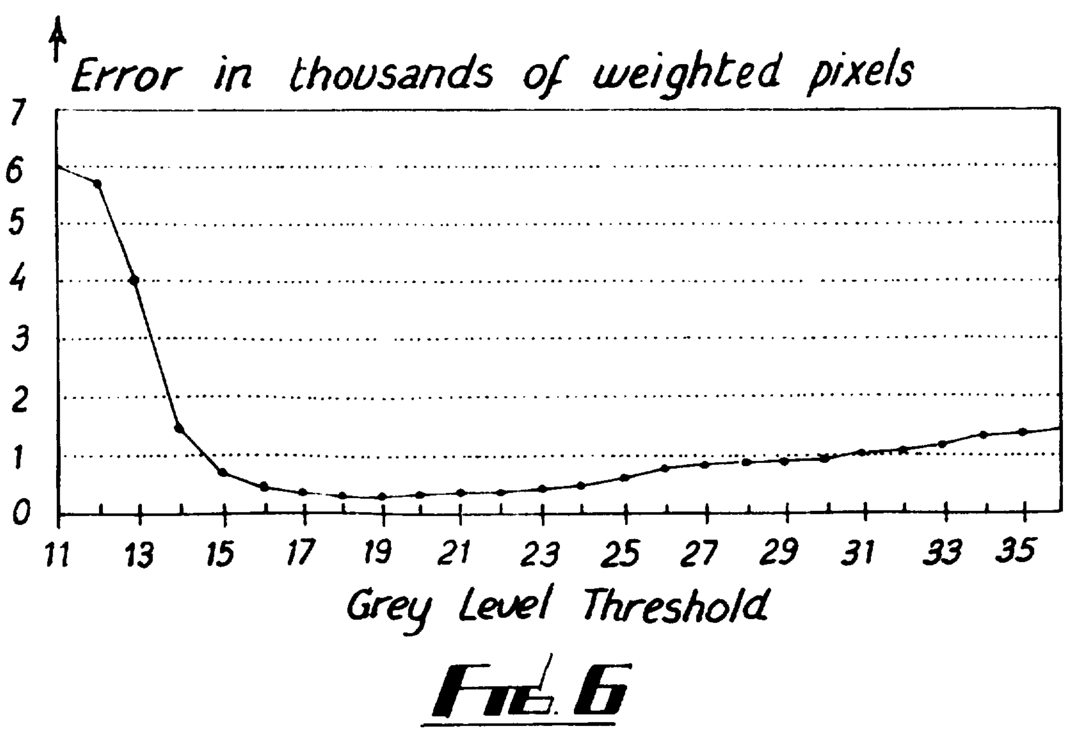


FIG. 6